# EUROPEAN PATENT APPLICATION

(11) **EP 3 562 251 A1**
(43) Date of publication of application: **30.10.2019**
(21) Application number: 17884014.6
(22) Date of filing: 19.12.2017
(51) Int. Cl.: H04W 74/08, H04L 5/00, H04L 12/865

(54) **USER EQUIPMENT AND RELATED METHOD**

(30) Priority: 22.12.2016 CN 201611204493
(71) Applicant: Sharp Kabushiki Kaisha, Sakai City, Osaka 590-8522 (JP); FG Innovation Company Limited, New Territories Hong Kong (CN)
(72) Inventor: XIAO, Fangying, Shanghai 201206 (CN); LIU, Renmao, Shanghai 201206 (CN); YAMADA, Shohei, Sakai City Osaka 590-8522 (JP)
(74) Representative: Müller-Boré & Partner Patentanwälte PartG mbB
(86) International application number: PCT/CN2017/117183
(87) International publication number: WO 2018/113664

(57) **Abstract**

Provided is a method for user equipment (UE), the method comprising: creating a first common control channel (CCCH) and a second common control channel (CCCH) with different priorities for respectively transmitting a dedicated radio resource control (RRC) message and a system information request message, wherein the system information request message is used for requesting system information other than minimum system information; according to the priorities of the first CCCH and the second CCCH, determining to use which CCCH of the first CCCH and the second CCCH and including CCCH service data unit (SDU) corresponding to same in a random access message 3 'Msg3' or to include both CCCH SDUs of the first CCCH and the second CCCH in the random access message 3 'Msg3'; and sending the random access message 3 'Msg3' to a base station.

## Description

### Technical Field

The present disclosure relates to the field of wireless communications technologies. More specifically, the present disclosure relates to user equipment and a related method.

### Background

A new research project on 5G technical standards (see non-patent literature: RP-160671: New SID Proposal: Study on New Radio Access Technology) was proposed by NTT DOCOMO at the 3rd Generation Partnership Project (3GPP) RAN#71 plenary meeting held in March 2016, and was approved. The goal of the research project is to develop a New Radio (NR) access technology to meet all of the application scenarios, requirements, and deployment environments of 5G. For better energy conservation and emission reduction, the initial requirement of the project is to avoid repeated sending of unnecessary information by the network side, including avoiding periodic sending of all system information (denoted as SI).

The present invention solves the problem of a conflict between a random access process used to request system information and general random access.

### Summary of Invention

According to a first aspect of the present disclosure, a method used in user equipment (UE) is provided. The method comprises: creating a first common control channel (CCCH) and a second common control channel (CCCH) having different priorities for respectively transmitting a dedicated radio resource control (RRC) message and a system information request message, wherein the system information request message is used for requesting system information other than minimum system information; determining, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'; and sending the random access message 3 'Msg3' to a base station.

In one embodiment, the dedicated RRC message comprises one or more of the following: an RRC connection request message, an RRC connection reestablishment request message, and an RRC connection resume request message.

According to a second aspect of the present disclosure, user equipment (UE) is provided. The UE comprises: a channel creation unit, configured to create a first common control channel (CCCH) and a second common control channel (CCCH) having different priorities for respectively transmitting a dedicated radio resource control (RRC) message and a system information request message, wherein the system information request message is used for requesting system information other than minimum system information; a determining unit, configured to determine, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'; and a sending unit, configured to send the random access message 3 'Msg3' to a base station.

In one embodiment, the dedicated RRC message comprises one or more of the following: an RRC connection request message, an RRC connection reestablishment request message, and an RRC connection resume request message.

According to a third aspect of the present disclosure, a method used in user equipment (UE) is provided. The method comprises: creating a first CCCH and a second CCCH for respectively transmitting a dedicated RRC message and a system information request message with different priorities; selecting a preamble sequence corresponding to a CCCH having a higher priority in the first CCCH and the second CCCH; and sending the selected preamble sequence to a base station.

In one embodiment, the dedicated RRC message comprises one or more of the following: an RRC connection request message, an RRC connection reestablishment request message, and an RRC connection resume request message.

According to a fourth aspect of the present disclosure, user equipment (UE) is provided. The UE comprises: a channel creation unit, configured to create a first CCCH and a second CCCH for respectively transmitting a dedicated RRC message and a system information request message with different priorities; a selection unit, configured to select a preamble sequence corresponding to a CCCH having a higher priority in the first CCCH and the second CCCH; and a sending unit, configured to send the selected preamble sequence to a base station.

In one embodiment, the dedicated RRC message comprises one or more of the following: an RRC connection request message, an RRC connection reestablishment request message, and an RRC connection resume request message.

According to a fifth aspect of the present disclosure, a method used in user equipment (UE) is provided. The method comprises: determining priorities for transmitting a system information request message and a dedicated RRC message, wherein the system information request message is used for requesting system information other than minimum system information; selecting, according to the priorities, a preamble sequence corresponding to a message having a higher priority in the system information request message and the dedicated RRC message when random access triggered by the system information request message conflicts with random access triggered by the dedicated RRC message; and sending the selected preamble sequence to a base station.

In one embodiment, if a priority of the system information request message is lower than a priority of the dedicated RRC message, and if an RRC process for requesting system information is triggered, the method further comprises: determining whether any RRC process other than the RRC process for requesting system information is triggered or running; and if an RRC process other than the RRC process for requesting system information is triggered or running, waiting for the triggered or running another RRC process to end, and then starting the RRC process for requesting system information; or terminating the RRC process for requesting system information.

In one embodiment, if a priority of the system information request message is lower than a priority of the dedicated message, and if an RRC process other than an RRC process for requesting system information is triggered, the method further comprises: determining whether any RRC process for requesting system information is running; and if an RRC process for requesting system information is running, terminating the running RRC process for requesting system information, and performing the RRC process other than the RRC process for requesting system information, and after the RRC process other than the RRC process for requesting system information ends, restarting the RRC process for requesting system information.

In one embodiment, if a priority of the system information request message is higher than a priority of the dedicated RRC message, and if an RRC process for requesting system information is triggered, the method further comprises: determining whether any RRC process other than the RRC process for requesting system information is triggered or running; and if an RRC process other than the RRC process for requesting system information is triggered or running, terminating the running RRC process other than the RRC process for requesting system information, and performing the RRC process for requesting system information.

In one embodiment, if a priority of the system information request message is higher than a priority of the dedicated RRC message, and if an RRC process other than an RRC process for requesting system information is triggered, the method further comprises: determining whether any RRC process for requesting system information is triggered or running; and if an RRC process for requesting system information is triggered or running, waiting for the triggered or running RRC process for requesting system information to end, and then starting the RRC process other than the RRC process for requesting system information; or terminating the RRC process other than the RRC process for requesting system information.

According to a sixth aspect of the present disclosure, user equipment (UE) is provided. The UE comprises: a determining unit, configured to determine priorities for transmitting a system information request message and a dedicated RRC message, wherein the system information request message is used for requesting system information other than minimum system information; a selection unit, configured to select, according to the priorities, a preamble sequence corresponding to a message having a higher priority in the system information request message and the dedicated RRC message when random access triggered by the system information request message conflicts with random access triggered by the dedicated RRC message; and a sending unit, configured to send the selected preamble sequence to a base station.

In one embodiment, if a priority of the system information request message is lower than a priority of the dedicated RRC message, and if an RRC process for requesting system information is triggered, the UE further comprises: a first judgment unit, configured to determine whether any RRC process other than the RRC process for requesting system information is triggered or running; and a first RRC process control unit, configured to, if an RRC process other than the RRC process for requesting system information is triggered or running, wait for the triggered or running another RRC process to end, and then start the RRC process for requesting system information; or terminate the RRC process for requesting system information.

In one embodiment, if a priority of the system information request message is lower than a priority of the dedicated message, and if an RRC process other than an RRC process for requesting system information is triggered, the UE further comprises: a second judgment unit, configured to determine whether any RRC process for requesting system information is running; and a second RRC process control unit, configured to, if an RRC process for requesting system information is running, terminate the running RRC process for requesting system information, and perform the RRC process other than the RRC process for requesting system information, and after the RRC process other than the RRC process for requesting system information ends, restart the RRC process for requesting system information.

In one embodiment, if a priority of the system information request message is higher than a priority of the dedicated RRC message, and if an RRC process for requesting system information is triggered, the UE further comprises: a third judgment unit, configured to determine whether any RRC process other than the RRC process for requesting system information is triggered or running; and a third RRC process control unit, configured to, if an RRC process other than the RRC process for requesting system information is triggered or running, terminate the running RRC process other than the RRC process for requesting system information, and perform the RRC process for requesting system information.

In one embodiment, if a priority of the system information request message is higher than a priority of the dedicated RRC message, and if an RRC process other than an RRC process for requesting system information is triggered, the UE further comprises: a fourth judgment unit, configured to determine whether any RRC process for requesting system information is triggered or running; and a fourth RRC process control unit, configured to, if an RRC process for requesting system information is triggered or running, wait for the triggered or running RRC process for requesting system information to end, and then start the RRC process other than the RRC process for requesting system information; or terminate the RRC process other than the RRC process for requesting system information.

According to a seventh aspect of the present disclosure, a method used in user equipment (UE) is provided. The method comprises: determining priorities of random access triggered by a system information request message and random access triggered by another event, wherein the system information request message is used for requesting system information other than minimum system information; selecting a preamble sequence corresponding to random access having a higher priority when the random access triggered by the system information request message conflicts with the random access triggered by the another event; and sending the selected preamble sequence to a base station.

In one embodiment, if a priority of the random access triggered by the system information request message is higher than a priority of the random access triggered by the another event, the method further comprises: determining whether any preamble sequence corresponding to the random access triggered by the system information request message is to be sent; and if a preamble sequence corresponding to the random access triggered by the system information request message is to be sent, selecting the preamble sequence corresponding to the random access triggered by the system information request message.

In one embodiment, the method further comprises: determining whether there is any running random access triggered by another event; if there is running random access triggered by another event, interrupting the currently running random access triggered by another random access triggering message; and selecting a preamble sequence corresponding to the random access triggered by the system information request message.

In one embodiment, if a priority of the random access triggered by the system information request message is lower than a priority of the random access triggered by the another event, the method further comprises: determining whether there is any random access triggered by another event; and if there is random access triggered by another event, selecting a preamble sequence corresponding to the random access triggered by the another event.

In one embodiment, the method further comprises: determining whether there is any running random access triggered by the system information request message; if there is running random access triggered by the system information request message, interrupting the currently running random access triggered by the system information request message; and selecting a preamble sequence corresponding to the random access triggered by the another event.

According to an eighth aspect of the present disclosure, user equipment (UE) is provided. The UE comprises: a determining unit, configured to determine priorities of random access triggered by a system information request message and random access triggered by another event, wherein the system information request message is used for requesting system information other than minimum system information; a selection unit, configured to select a preamble sequence corresponding to random access having a higher priority when the random access triggered by the system information request message conflicts with the random access triggered by the another event; and a sending unit, configured to send the selected preamble sequence to a base station.

In one embodiment, if a priority of the random access triggered by the system information request message is higher than a priority of the random access triggered by the another event, the UE further comprises: a first judgment unit, configured to determine whether any preamble sequence corresponding to the random access triggered by the system information request message is to be sent, wherein the selection unit is further configured to, if a preamble sequence corresponding to the random access triggered by the system information request message is to be sent, select the preamble sequence corresponding to the random access triggered by the system information request message.

In one embodiment, the first judgment unit is further configured to determine whether there is any running random access triggered by another event, and the UE further comprises: a first random access interruption unit, configured to, if there is running random access triggered by another event, interrupt the currently running random access triggered by another random access triggering message, wherein the selection unit is further configured to select a preamble sequence corresponding to the random access triggered by the system information request message.

In one embodiment, if a priority of the random access triggered by the system information request message is lower than a priority of the random access triggered by the another event, the UE further comprises: a second judgment unit, configured to determine whether there is any random access triggered by another event, wherein the selection unit is further configured to, if there is random access triggered by another event, select a preamble sequence corresponding to the random access triggered by the another event.

In one embodiment, the second judgment unit is further configured to determine whether there is any running random access triggered by the system information request message, and the UE further comprises: a second random access interruption unit, configured to, if there is running random access triggered by the system information request message, interrupt the currently running random access triggered by the system information request message, wherein the selection unit is further configured to select a preamble sequence corresponding to the random access triggered by the another event.

According to a ninth aspect of the present disclosure, a method used in user equipment (UE) is provided. The method comprises: determining priorities of random access triggered by a system information request message and random access triggered by another event, wherein the system information request message is used for requesting system information other than minimum system information; selecting a message corresponding to random access having a higher priority when the random access triggered by the system information request message conflicts with the random access triggered by the another event; and sending the selected message to a base station by including the selected message in a random access message 3 'Msg3'.

According to a tenth aspect of the present disclosure, user equipment (UE) is provided. The UE comprises: a determining unit, configured to determine priorities of random access triggered by a system information request message and random access triggered by another event, wherein the system information request message is used for requesting system information other than minimum system information; a selection unit, configured to select a message corresponding to random access having a higher priority when the random access triggered by the system information request message conflicts with the random access triggered by the another event; and a sending unit, configured to send the selected message to a base station by including the selected message in a random access message 3 'Msg3'.

### Brief Description of Drawings

The above and other features of the present disclosure will become more apparent with the following detailed description in conjunction with the accompanying drawings, in which:
FIG. 1 schematically illustrates an existing random access process;
FIG. 2 is a flowchart of a method 200 used in user equipment (UE) according to an embodiment of the present disclosure;
FIG. 3 is a flowchart of a method 300 used in user equipment (UE) according to an embodiment of the present disclosure;
FIGs. 4 to 8 are flowcharts of a method 400 used in user equipment (UE) according to an embodiment of the present disclosure;
FIGs. 9 to 13 are flowcharts of a method 900 used in user equipment (UE) according to an embodiment of the present disclosure;
FIG. 14 is a flowchart of a method 1400 used in user equipment (UE) according to an embodiment of the present disclosure;
FIG. 15 is a block diagram of UE 1500 according to an embodiment of the present disclosure;
FIG. 16 is a block diagram of UE 1600 according to an embodiment of the present disclosure;
FIG. 17 is a block diagram of UE 1700 according to an embodiment of the present disclosure;
FIG. 18 is a block diagram of UE 1800 according to an embodiment of the present disclosure; and
FIG. 19 is a block diagram of UE 1900 according to an embodiment of the present disclosure.

### Detailed Description of Embodiments

The following describes the present disclosure in detail with reference to the accompanying drawings and specific embodiments. It should be noted that the present disclosure should not be limited to the specific embodiments described below. In addition, for simplicity, detailed description of the known art not directly related to the present disclosure is omitted to prevent confusion in understanding the present disclosure.

In an existing LTE system, in order to ensure normal access of LTE user equipment (UE), a base station (eNB) periodically broadcasts access stratum and non-access stratum information, which is collectively referred to as system information. In the present LTE system, the system information is divided into a Master Information Block (MIB) and several System Information Blocks (SIBs) for carrying different content. Up to 20 types of SIBs have been defined by LTE so far. The MIB carries the necessary and most frequently transmitted parameters for acquiring basic information of a cell. SIB1 includes parameters for determining whether a cell is suitable for cell selection and time domain scheduling information of other SIBs. The MIB and the SIB1 are sent in a predefined time period. Other SIBs with the same scheduling period are arranged in the same System Information Message (referred to as an SI Message) and are periodically sent in a corresponding system information window (SI-window) according to the time domain scheduling information carried in the SIB1. Other than MIB and SIB1, not all SIBs need to be broadcast. According to the features supported by a current access network device and the features of the non-access stratum, the eNB selects a system information block relevant to the features for broadcast. For example, if the current access network supports enhanced access control, the eNB broadcasts SIB14, which carries relevant information of EAB; otherwise, broadcasting is not performed. If the current access network supports a multimedia broadcast multicast service (MBMS), the eNB broadcasts SIB13 and so on. These broadcast SIBs are reflected in the scheduling information carried by the SIB1; and unscheduled SIBs are not broadcast. Prior to initiating the access, the UE further needs to acquire other SIBs based on its own features in addition to MIB and SIB1 that must be acquired; and then the access is initiated. For example, if the UE supports multiple RATs, SIB8 further needs to be read to acquire inter-RAT-related cell reselection information; otherwise, SIB8 does not need to be read. If the UE supports WLAN interoperation, SIB 17 further needs to be acquired; otherwise, SIB17 does not need to be acquired.

It was reached at the 3GPP RAN2#95 meeting that NR system information is divided into two types. One type is periodically broadcast system information (referred to as minimum system information, Minimum SI), where this type of system information may include system information that is the most important or needed for acquiring other system information or required by most UE, for example, parameters that must be acquired before UE performs random access. The other type is system information not included in the minimum system information (referred to as other system information, other SI). The other system information may not be periodically broadcast, but is sent only when the UE requests it or the network decides to send it.

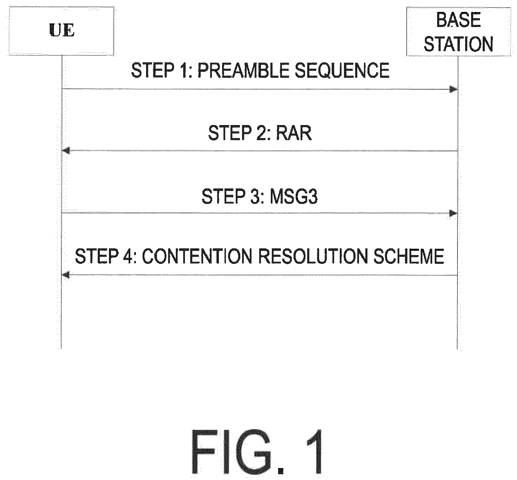

As shown in FIG. 1, an existing random access process includes the following four steps: (1) sending a selected preamble sequence (preamble); (2) receiving a random access response (RAR); (3) sending a message 3 (namely, Message 3); and (4) receiving a contention resolution message. The message 3 has different content depending on a current status of UE. The message 3 may include a cell radio network temporary identifier (C-RNTI) medium access control (MAC) control element (CE) or a common control channel (CCCH) service data unit (SDU). A non-contention based random access process includes only the first two steps. A contention based random access process includes all the four steps.

The UE may request other system information through the random access process. At present, some companies propose to request system information through step (1) of the random access process. That is, different preamble sequences are defined for different other system information (or system information blocks), and the UE requests relevant other system information by sending a corresponding preamble sequence. Some other companies propose to request system information through step (3) of the random access process. That is, the type of system information (or the type of system information block) to be requested by the UE is carried in a message 3.

The existing LTE system stipulates that only one random access process can be performed at a time in a MAC entity. If the UE uses a random access process to request system information, a conflict between the random access process and a random access process triggered by another event may occur. The conflict may occur in step (1) or step (3) of the random access process. How to solve a conflict between a random access process triggered by a request for other system information and a random access process triggered by the another event is a problem that needs to be solved.

The terms used in the present disclosure are described below. Unless otherwise stated, the terms involved in the present disclosure are defined as follows.
RRC: Radio Resource Control;
MAC: Medium Access Control;
CCCH: Common Control Channel, which can be used to send an uplink or downlink channel of control information when UE and a base station have not been associated (for example, in establishing an RRC connection);
UL-SCH: Uplink Shared Channel, which has the following one or more features: possibly using beamforming, supporting dynamic link adaptation by changing transmit power, modulation and coding, supporting an HARQ, and supporting dynamic and semi-persistent resource allocation;
SDU: Service Data Unit;
RRC connection request message: RRCConnectionRequest, which is a message for requesting establishment of an RRC connection;
RRC connection reestablishment request message: rrcConnectionReestablishmentRequest, which is a message for requesting reestablishment of an RRC connection;
RRC connection resume request message: RRCConnectionResumeRequest, which is a message for requesting resumption of a suspended RRC connection;
RRC connected state: RRC_CONNECTED, where the UE is in the RRC_CONNECTED state after an RRC connection is established.
RRC inactive state: RRC_INACTIVE, where in this state, at least one base station (denoted as eNB) stores access stratum context (AS Context) information of the UE and can maintain the connection between a 5G-RAN and a 5G-CN (namely, a core network to which the 5G-RAN is connected);
RRC idle state: RRC IDLE, where the UE is in the RRC_IDLE state when no RRC connection is established (and/or the UE is not in the RRC_INACTIVE state or the base station or 5G-RAN or EUTRAN does not store user context information);
PDCCH order: corresponding to DCI in a specific format (for example, DCI format 1A) and used for triggering a random access process, where the DCI carries relevant parameters for random access;
Msg3: random access message 3, which is a part of a random access process and is a message sent by the UE to the base station. The message 3 may have different content depending on the current status of the UE. The message 3 comes from an upper layer or an RRC layer, and may include a C-RNTI MAC CE or a CCCH SDU and/or a UE conflict resolution identifier and be transmitted on an uplink shared channel UL-SCH.

When random access is performed using four steps, the message 3 is a message sent in the third step of random access; when random access is performed using two steps, the message 3 is sent in the first step of random access. The performing random access using four steps refers to performing random access including the following four steps: in the first step, UE sends a preamble sequence to a base station; in the second step, the UE receives a random access response (RAR) from the base station; in the third step, the UE sends a message 3 to the base station; and in the fourth step, the UE receives a message 4 from the base station for contention resolution, where the message 4 may also differ depending on the content carried in the message 3. It should be noted that non-contention based random access does not need the message 3 and message 4 used for contention resolution. The performing random access using two steps refers to performing random access including the following two steps: in the first step, UE sends to a base station a preamble sequence and all or some information carried in a message 3 used in performing random access using four steps, and the UE may also send other information that is not carried in the message 3; and in the second step, the UE receives a response from the base station.

In the present invention, the message 3 may refer to the message sent in step 3 in the four-step random access, or may refer to the message sent in step 2 in the two-step random access. The present disclosure is described by using an example in which four-step random access is used for requesting system information. The present disclosure is also applicable to scenarios in which two-step random access is used for requesting system information.

In the present disclosure, random access is divided into two types: one type is random access triggered by a system information request, where this type of random access is triggered by an upper layer (for example, an RRC layer) requesting other system information, and is referred to as system information request random access in the present disclosure; the other type is random access triggered by events other than this, and is referred to as general random access in the present disclosure. The embodiments of the present disclosure are also applicable to other naming methods. In the present disclosure, a message for requesting other system information is referred to as a system information request message. In the present disclosure, a message including a CCCH SDU corresponding to the system information request message is also referred to as a message 3, but the present disclosure is also applicable to other naming methods.

Three modes that can be used by UE to request other system information are introduced first below:
Mode 1: different other system information is mapped to different preamble sequences, and the UE requests relevant other system information by sending a corresponding preamble sequence. For example, system information required by the UE in different states may be different. The other system information is classified and corresponding preamble sequences (or preamble sequence groups) are defined (or associated) according to system information required by the UE in different states. At present, the UE state in an NR system may be an RRC connected state, an RRC idle state, or an RRC inactive state. Accordingly, the other system information may be classified according to the system information required by the UE in the corresponding state (other system information corresponding to different states may be partially identical). The UE selects a corresponding preamble sequence for sending according to the state thereof, and a base station sends corresponding other system information according to the received preamble sequence. In a way similar to LTE, system information may also be grouped to obtain system information blocks, and one preamble sequence or group of preamble sequences is reserved for each system information block (or system information block group). In this way, a random access conflict may occur in the process of selecting a preamble sequence to be sent in random access step (1) (as shown in FIG. 1).
Mode 2: one preamble sequence or group of preamble sequences is reserved for requesting other system information, but the type of the other system information requested by the UE is instructed by a random access message 3. If an RAR message responding to a preamble sequence of the request for other system information is the same as an RAR message responding to a preamble sequence of a general random access process, a random access conflict may occur in the process of selecting a preamble sequence to be sent in random access step (1), or in determining to include CCCH SDUs from different CCCHs or CCCH SDUs for different purposes or CCCH SDUs including different RRC messages in the random access message 3.
   If an RAR message responding to the request for other system information is different from an RAR message responding to an existing LTE (or general or other) random access process, a random access conflict may occur in the process of selecting a preamble sequence to be sent in random access step (1).
Mode 3: a preamble sequence is shared with an existing LTE (or general or other) random access process, and the type of other system information requested by the UE is instructed by a random access message 3. If an RAR message responding to the request for other system information is different from an RAR message responding to a general random access process, in this mode, a random access conflict may occur in the process of selecting a preamble sequence to be sent in random access step (1). In this mode, a random access conflict may occur in the message 3 in determining whether CCCH SDUs from different CCCHs or CCCH SDUs for different purposes are to be carried.

According to the present disclosure, based on the different modes of requesting system information, if a conflict occurs in the process of selecting a preamble sequence to be sent (namely, determining which preamble sequence to select for sending) in random access step (1), priorities between random access triggered by a system information request (or a system information request message) and random access triggered by another event may be predefined or configured through RRC signaling. Based on the priorities, a MAC entity can select a preamble sequence corresponding to an event having a higher priority for sending when a conflict occurs. If the conflict occurs in the random access message 3 (namely, determining which message or CCCH SDU or data to be included in the message 3), priorities between a system information request message (or a CCCH SDU corresponding to the message) and another RRC message (or a CCCH SDU corresponding to the message) or data or logical channels corresponding to the messages may be predefined or configured through RRC signaling. The another RRC message (referred to as a dedicated RRC message) includes an RRC connection request message, an RRC connection reestablishment request message, an RRC connection resume request message, and so on. Based on the priorities, the MAC entity preferentially includes an RRC message having a higher priority or a CCCH SDU or data corresponding to the message in the random access message 3.

Various methods used in user equipment (UE) according to embodiments of the present disclosure will be introduced below to resolve a conflict between a random access process triggered by a request for other system information and a random access process triggered by another event.

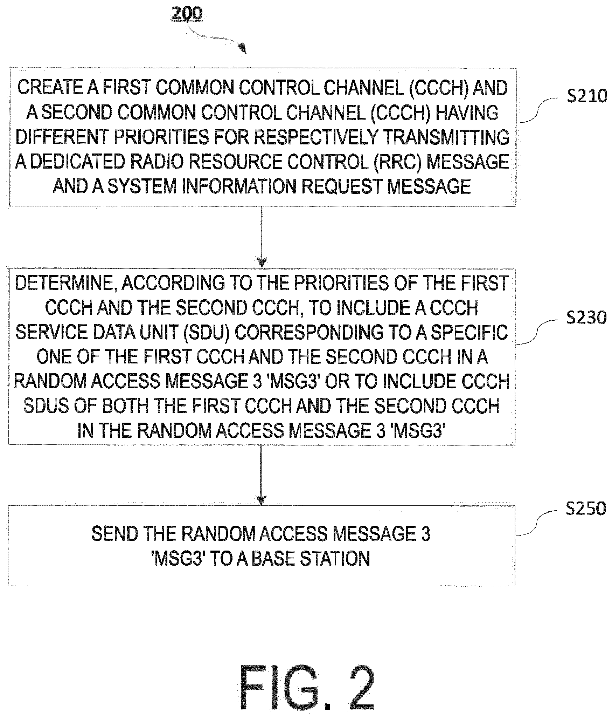

FIG. 2 is a flowchart of a method 200 used in user equipment (UE) according to an embodiment of the present disclosure.

As shown in the figure, in step S210, the user equipment (UE) creates a first common control channel (CCCH) and a second common control channel (CCCH) having different priorities for respectively transmitting a dedicated radio resource control (RRC) message and a system information request message, where the system information request message is used for requesting system information other than minimum system information.

Step S230: the user equipment (UE) determines, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'.

Step S250: the user equipment (UE) sends the random access message 3 'Msg3' to a base station (or delivers the message 3 to a lower layer or a physical layer or a transmission channel UL-SCH to send the message 3 to the base station).

For example, the dedicated RRC message includes one or more of the following: an RRC connection request message, an RRC connection reestablishment request message, and an RRC connection resume request message.

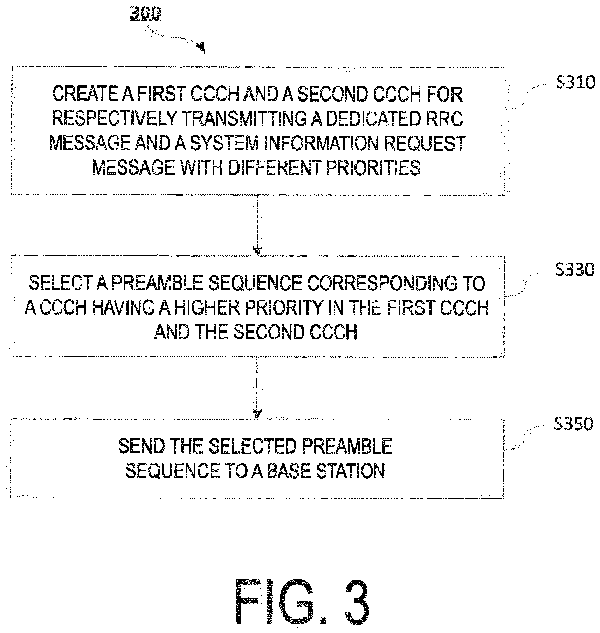

FIG. 3 is a flowchart of a method 300 used in user equipment (UE) according to an embodiment of the present disclosure.

As shown in the figure, in step S310, the user equipment (UE) creates a first CCCH and a second CCCH for respectively transmitting a dedicated RRC message and a system information request message with different priorities.

Step S330: the user equipment (UE) selects a preamble sequence corresponding to a CCCH having a higher priority in the first CCCH and the second CCCH.

Step S350: the user equipment (UE) sends the selected preamble sequence to a base station (or delivers a message 3 to a lower layer or a physical layer or a transmission channel UL-SCH to send the message 3 to the base station).

For example, the dedicated RRC message includes one or more of: an RRC connection request message, an RRC connection reestablishment request message, and an RRC connection resume request message.

In one implementation, a priority of the first CCCH is higher than a priority of the second CCCH. In this case, step S330 may include: selecting a preamble sequence from preamble sequences corresponding to the first CCCH when both the first CCCH and the second CCCH have CCCH SDUs to be sent.

In another implementation, the priority of the second CCCH is higher than the priority of the first CCCH. In this case, step S330 may include: selecting a preamble sequence from preamble sequences corresponding to the second CCCH when both the first CCCH and the second CCCH have CCCH SDUs to be sent.

It should be noted that if the first CCCH and the second CCCH share the same preamble sequence or preamble sequence group, when both the first CCCH and the second CCCH have CCCH SDUs to be sent, the UE selects a preamble sequence according to a predefined rule, for example, selects a preamble sequence according to the size of the message 3. In this case, the UE includes a CCCH SDU corresponding to the CCCH having the higher priority in the message 3. That is, in constructing the message 3, the UE first determines whether the CCCH having the higher priority has a CCCH SDU to be sent, and if yes, the UE includes the CCCH SDU having the higher priority in the message 3.

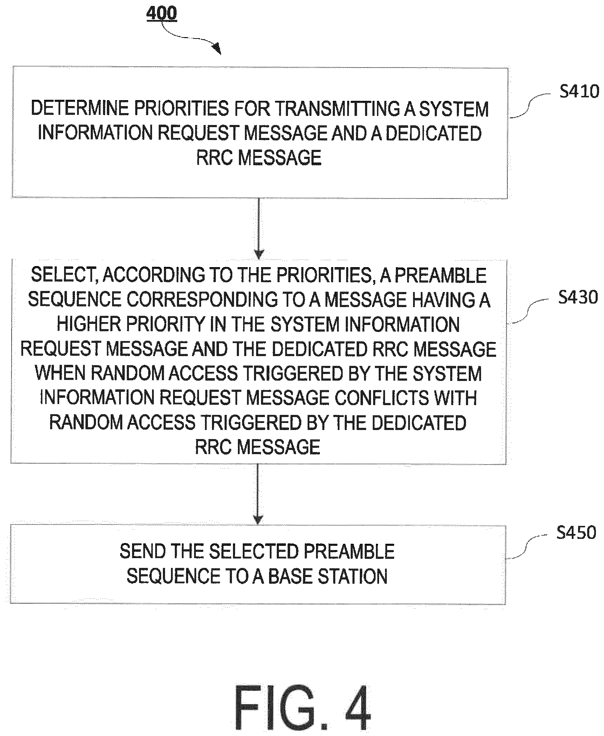

FIG. 4 is a flowchart of a method 400 used in user equipment (UE) according to an embodiment of the present disclosure.

As shown in the figure, in step S410, the user equipment (UE) determines priorities for transmitting a system information request message and a dedicated RRC message, where the system information request message is used for requesting system information other than minimum system information.

Step S430: select, according to the priorities, a preamble sequence corresponding to a message having a higher priority in the system information request message and the dedicated RRC message when random access triggered by the system information request message conflicts with random access triggered by the dedicated RRC message.

Step S450: the user equipment (UE) sends the selected preamble sequence to a base station.

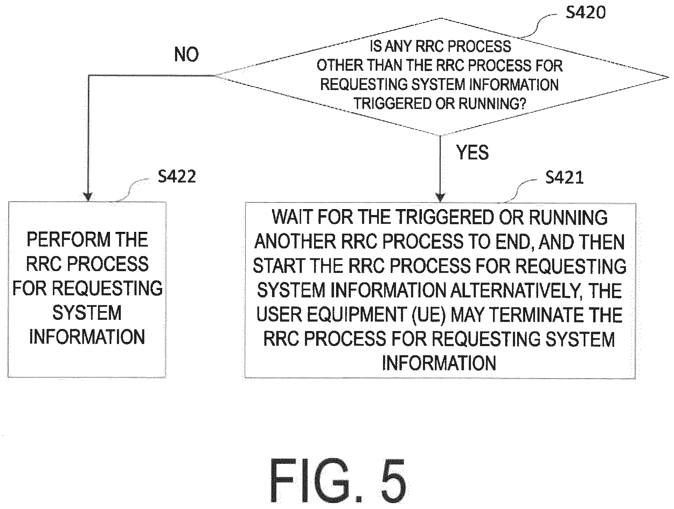

In one implementation, if a priority of the system information request message is lower than a priority of the dedicated RRC message, and if an RRC process for requesting system information is triggered (that is, a system information request message is to be constructed and sent), the method 400 may further include steps S420, S421, and S422 shown in FIG. 5.

Step S420: the user equipment (UE) determines whether any RRC process other than the RRC process for requesting system information is triggered or running (that is, a dedicated RRC message is to be sent or has been sent but no response message is received). The RRC process other than the RRC process for requesting system information in the present disclosure includes one or more of the following processes: an RRC connection establishment process, an RRC connection resume process, an RRC connection reestablishment process, and so on.

If yes, in step S421, the user equipment (UE) waits for the triggered or running another RRC process to end, and then starts the RRC process for requesting system information. Alternatively, the user equipment (UE) may terminate the RRC process for requesting system information.

If not, in step S422, the user equipment (UE) performs the RRC process for requesting system information.

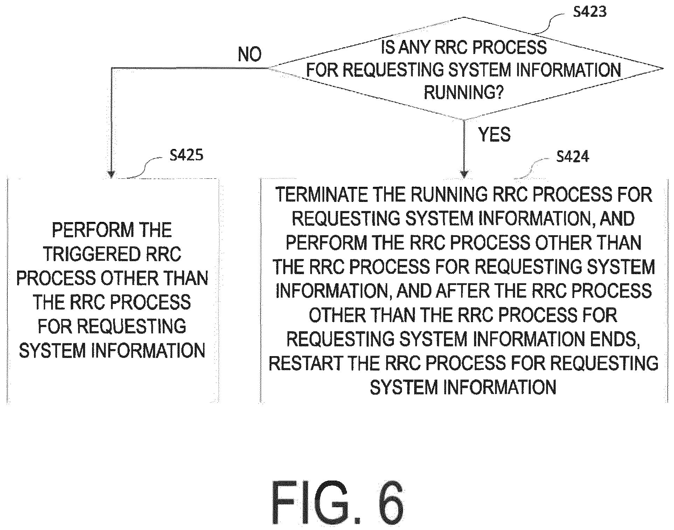

In another implementation, if a priority of the system information request message is lower than a priority of the dedicated RRC message, and if an RRC process other than an RRC process for requesting system information is triggered, the method 400 may further include steps S423, S424, and S425 shown in FIG. 6.

Step S423: the user equipment (UE) determines whether any RRC process for requesting system information is running.

If yes, in step S424, the user equipment (UE) terminates the running RRC process for requesting system information, performs the RRC process other than the RRC process for requesting system information, and after the RRC process other than the RRC process for requesting system information ends, restarts the RRC process for requesting system information.

If not, in step S425, the user equipment (UE) performs the triggered RRC process other than the RRC process for requesting system information.

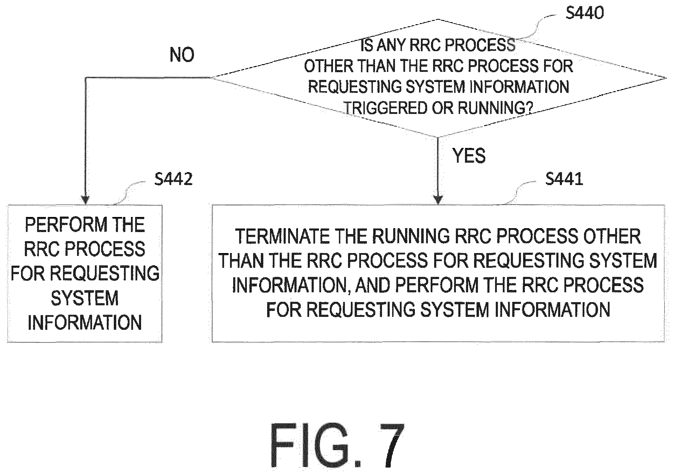

In a further implementation, if a priority of the system information request message is higher than a priority of the dedicated RRC message, and if an RRC process for requesting system information is triggered, the method 400 may include steps S440, S441, and S442 shown in FIG. 7.

Step S440: the user equipment (UE) determines whether any RRC process other than the RRC process for requesting system information is triggered or running.

If yes, in step S441, the user equipment (UE) terminates the running RRC process other than the RRC process for requesting system information, and performs the RRC process for requesting system information.

If not, in step S442, the user equipment (UE) performs the RRC process for requesting system information.

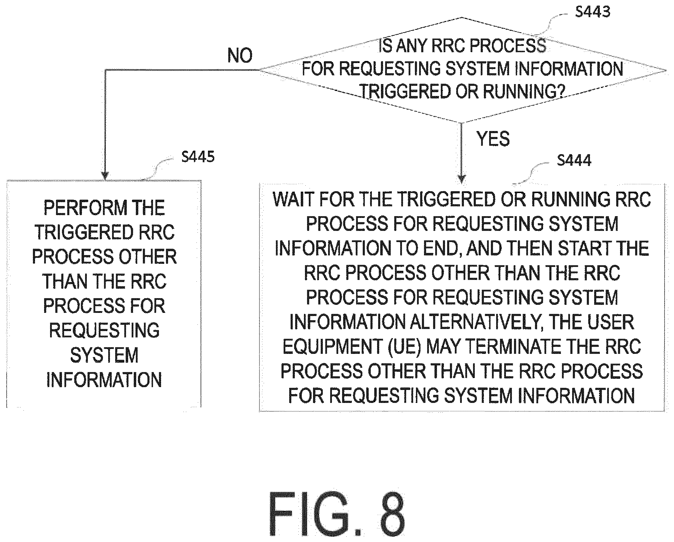

In a still further implementation, if a priority of the system information request message is higher than a priority of the dedicated RRC message, and if an RRC process other than an RRC process for requesting system information is triggered, the method 400 may include steps S443, S444, and S445 shown in FIG. 8.

Step S443: the user equipment (UE) determines whether any RRC process for requesting system information is triggered or running.

If yes, in step S444, the user equipment (UE) waits for the triggered or running RRC process for requesting system information to end, and then starts the RRC process other than the RRC process for requesting system information. Alternatively, the user equipment (UE) may terminate the RRC process other than the RRC process for requesting system information.

Otherwise, in step S445, the user equipment (UE) performs the triggered RRC process other than the RRC process for requesting system information.

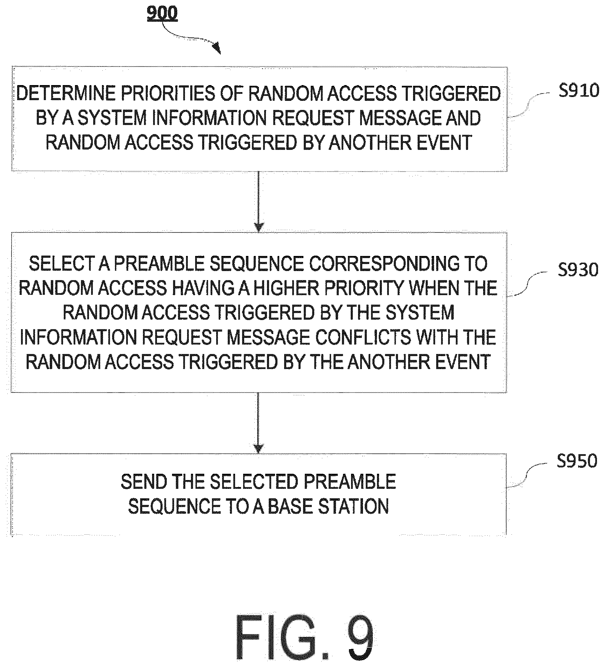

FIG. 9 is a flowchart of a method 900 used in user equipment (UE) according to an embodiment of the present disclosure.

As shown in the figure, in step S910, the user equipment (UE) determines priorities of random access triggered by a system information request message and random access triggered by another event (for example, an upper layer or dedicated RRC message, a MAC layer itself, or a PDCCH order) or determines priorities of preamble sequences corresponding to random access triggered by different events (for example, a system information request, a dedicated RRC message, a MAC layer itself, or a PDCCH order), where the system information request message is used for requesting system information other than minimum system information.

Step S930: select a preamble sequence corresponding to random access having a higher priority or select a preamble sequence having a higher priority when the random access triggered by the system information request message conflicts with the random access triggered by the another event.

Step S950: the user equipment (UE) sends the selected preamble sequence to a base station.

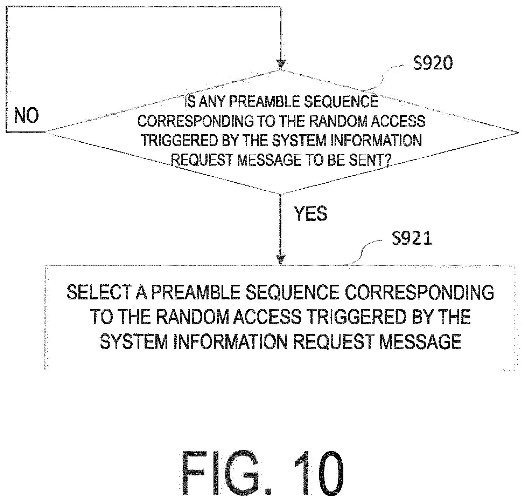

In one implementation, if a priority of the random access triggered by the system information request message or of a corresponding preamble sequence is higher than a priority of the random access triggered by the another event or of a corresponding preamble sequence, the method 900 may further include steps S920 and S921 shown in FIG. 10.

Step S920: the user equipment (UE) determines whether any preamble sequence corresponding to the random access triggered by the system information request message is to be sent.

If yes, in step S921, a preamble sequence corresponding to the random access triggered by the system information request message is selected. If not, step S920 is performed.

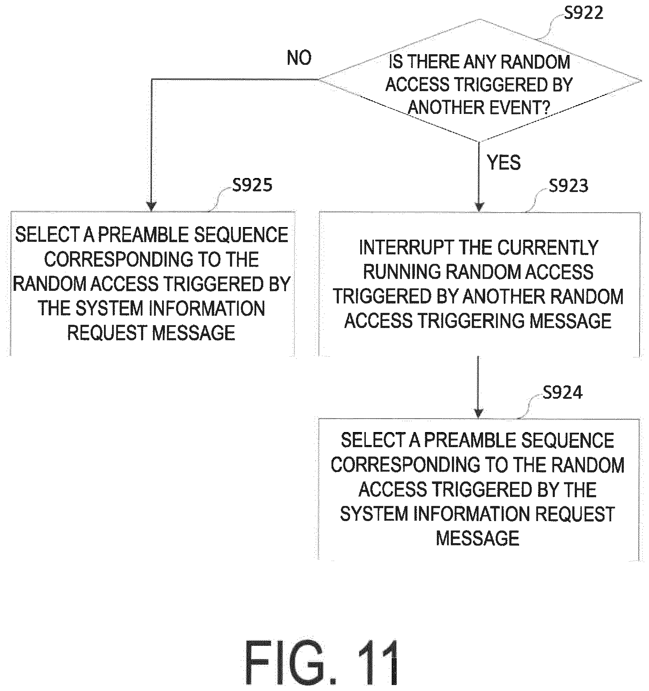

As shown in FIG. 11, if the random access for requesting system information is triggered, the method 900 may optionally further include steps S922, S923, S924, and S925.

Step S922: the user equipment (UE) determines whether there is any running random access triggered by another event.

If yes, in step S923, the user equipment (UE) interrupts the currently running random access triggered by another random access triggering message, and in step S924, the user equipment (UE) selects a preamble sequence corresponding to the random access triggered by the system information request message.

If not, in step S925, a preamble sequence corresponding to the random access triggered by the system information request message is selected.

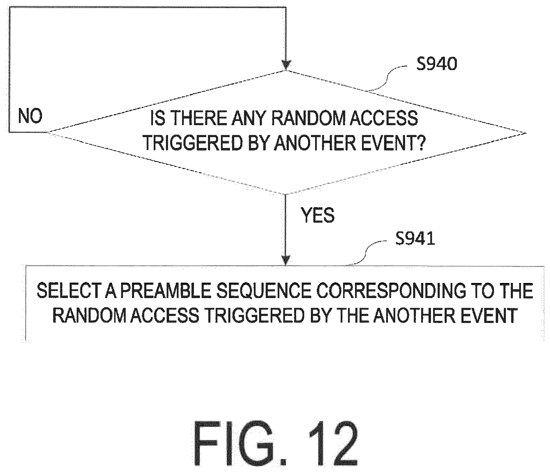

In another implementation, if a priority of the random access triggered by the system information request message is lower than a priority of the random access triggered by the another event, the method 900 may further include steps S940 and S941 shown in FIG. 12.

Step S940: the user equipment (UE) determines whether there is any random access triggered by another event.

If yes, in step S941, a preamble sequence corresponding to the random access triggered by the another event is selected. If not, step S940 may be performed.

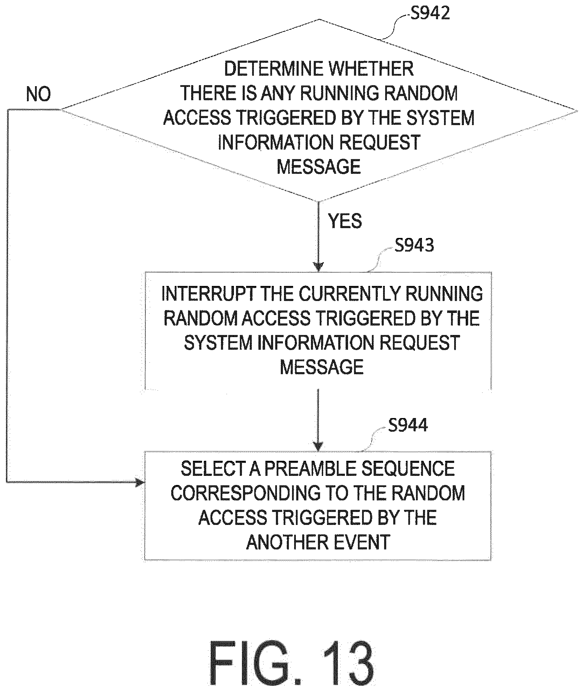

As shown in FIG. 13, the method 900 may optionally further include steps S942, S943, and S944.

Step S942: the user equipment (UE) determines whether there is any running random access triggered by the system information request message.

If yes, in step S943, the currently running random access triggered by the system information request message is interrupted, and in step S944, a preamble sequence corresponding to the random access triggered by the another event is selected.

Otherwise, in step S944, a preamble sequence corresponding to the random access triggered by the another event is selected.

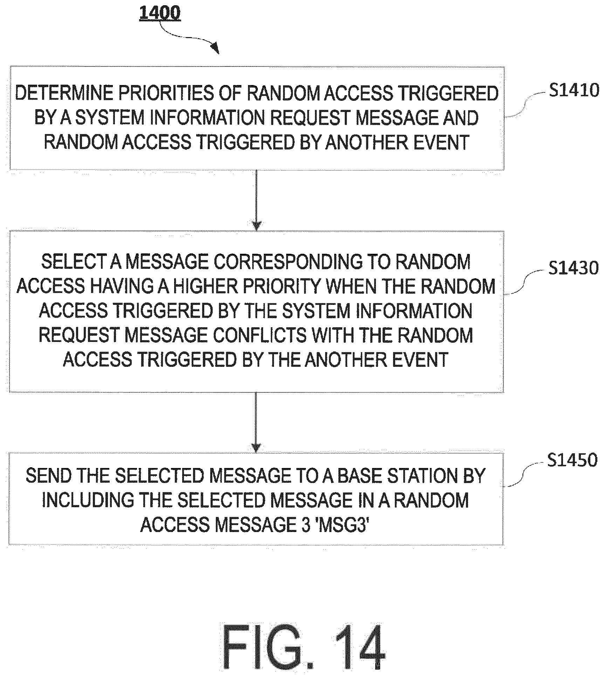

FIG. 14 is a flowchart of a method 1400 used in user equipment (UE) according to an embodiment of the present disclosure.

As shown in the figure, in step S1410, the user equipment (UE) determines priorities of random access triggered by a system information request message and random access triggered by another event, where the system information request message is used for requesting system information other than minimum system information.

Step S1430: select a message corresponding to random access having a higher priority when the random access triggered by the system information request message conflicts with the random access triggered by the another event.

Step S1450: the user equipment (UE) sends the selected message to a base station by including the selected message in a random access message 3 'Msg3'.

Different modes for UE to resolve a conflict will be introduced below in detail based on scenarios in which the conflict occurs.

### Scenario 1: the conflict occurs in an RRC layer

If the UE requests different other system information by sending different preamble sequences, the RRC layer (or referred to as an upper layer) selects a corresponding preamble sequence according to system information to be requested, and delivers or instructs the preamble sequence to a lower layer (or a MAC layer) for sending. The specific process is as follows:
Due to service requirements or the expiration of system information, a NAS layer (or referred to as an upper layer) or RRC layer triggers a system information request process of the UE. If there is currently no other running RRC process (including, but not limited to, RRC connection establishment, RRC connection reestablishment, and RRC connection resumption) or no CCCH SDU to be sent on a CCCH logical channel, the UE may perform one of the following two embodiments according to the different modes for the UE to request other system information:
In one embodiment, the UE selects a corresponding preamble sequence according to system information to be requested, and delivers the preamble sequence to a lower layer (or a MAC layer).

In the other embodiment, the UE constructs a system information request message according to the system information to be requested, and delivers the system information request message to a lower layer for transmission.

Priorities of an RRC process for requesting other system information (or a system information request message) and another RRC process or RRC connection establishment process (or an RRC connection request message or RRC connection reestablishment request message or RRC connection resume request message) may be predefined or configured through RRC signaling.

In one embodiment, assume a priority of the RRC process for requesting other system information (or the system information request message) is lower than a priority of the running another RRC process or RRC connection establishment process (or the RRC connection request message or RRC connection reestablishment request message or RRC connection resume request message). If the NAS layer or upper layer or RRC layer triggers a system information request process, the UE determines whether any other RRC process or RRC connection establishment process is triggered or running (that is, an RRC connection request message or RRC connection reestablishment request message or RRC connection resume request message is to be sent or has been sent but no response message is received); if yes, the UE may wait for the triggered or running another RRC process or RRC connection establishment process to end, and then start the RRC process for requesting other system information (namely, construct and send a system information request message or deliver a system information request message to the lower layer); or the UE may terminate the RRC process for requesting other system information (namely, discard the system information request message); and if not, the UE may construct the system information request message and deliver it to the lower layer for sending. If the RRC connection establishment process or another RRC process is triggered, the UE determines whether there is any running RRC process for requesting other system information (for example, a system information request message is to be sent or has been sent but no response message is received); if yes, the UE may terminate the running RRC process for requesting system information (for example, discard or delete the system information request message that has not been sent, or if the message has been sent but no response message is received, stop receiving any response message) and perform the RRC process having the higher priority. After the RRC process having the higher priority ends, the RRC process for requesting other system information may be restarted (that is, a system information request message is sent or a system information request message is delivered to the lower layer); if not, the UE may construct a corresponding message and deliver it to the lower layer for sending (for example, construct and send an RRC connection request message or RRC connection reestablishment request message or RRC connection resume request message and deliver the message to the lower layer for sending).

Assume a priority of the RRC process for requesting other system information (or a system information request message) is higher than a priority of the running another RRC process or RRC connection establishment process (or an RRC connection request message or RRC connection reestablishment request message or RRC connection resume request message). If the NAS layer or upper layer or RRC layer triggers a system information request process, the UE determines whether any other RRC process or RRC connection establishment process is triggered or running; if yes, the UE may terminate the running another RRC process or RRC connection establishment process (for example, discard or delete an RRC connection request message or RRC connection reestablishment request message or RRC connection resume request message that has not been sent) and perform the RRC process for requesting other system information (namely, send a system information request message or deliver a system information request message to the lower layer) (the terminated RRC process may be restarted after the system information request process ends); and if not, the UE may construct a system information request message and deliver it to the lower layer for sending. If the RRC connection establishment process or another RRC process is triggered, the UE determines whether any system information request process is triggered or any RRC process for requesting other system information is running (for example, a system information request message is to be sent or has been sent but no response message is received); if yes, the UE may wait for the triggered or running process for requesting system information to end, and then start the another RRC process or RRC connection establishment process (namely, construct and send an RRC connection request message or RRC connection reestablishment request message or RRC connection resume request message and deliver the message to the lower layer for sending); or the UE may terminate the RRC connection establishment process or another RRC process (for example, discard or delete an RRC connection request message or RRC connection reestablishment request message or RRC connection resume request message that has not been sent); and if not, the UE may start the another RRC process or RRC connection establishment process (namely, construct and send an RRC connection request message or RRC connection reestablishment request message or RRC connection resume request message and deliver the message to the lower layer for sending).

It should be noted that the terminating the running RRC process (including the system information request process, RRC connection establishment process, or the like) or starting or restarting an RRC process in the present disclosure may include reconfiguring a physical channel and/or reconfiguring a semi-persistent scheduling configuration and/or reconfiguring a MAC main configuration and/or reconfiguring a CCCH logical channel. The reconfiguration may be reapplication of a default configuration. The RRC connection establishment process in the present disclosure may be an RRC connection establishment process corresponding to an RRC connection request message, an RRC connection reestablishment request message, or an RRC connection resume request message.

In another embodiment, a second CCCH logical channel different from a first CCCH logical channel is defined. The first CCCH logical channel (including uplink and downlink CCCH logical channels) is used for transmitting an RRC connection request message, an RRC connection reestablishment request message, or an RRC connection resume request message (the message is transmitted on the uplink CCCH logical channel) and a corresponding response message (the message is transmitted on the downlink CCCH logical channel). The second CCCH logical channel (including an uplink CCCH logical channel and/or downlink CCCH logical channel) is used for transmitting a system information request message (the message is transmitted on the uplink CCCH logical channel) and/or a corresponding response message (the message is transmitted on the downlink CCCH logical channel). Alternatively, the second downlink CCCH logical channel may not be defined separately, and instead, an existing downlink logical channel, for example, the first downlink CCCH logical channel, is used. Some parameters of the second CCCH logical channel are different from those of the first CCCH logical channel. For example, a priority of the second CCCH logical channel is defined as a value (for example, 2 or any other value) different from that of the first CCCH logical channel, and/or a logical channel group identifier (logicalChannelGroup) of the second CCCH logical channel is defined as a value (for example, 1 or any other value) different from a logical channel group identifier of the first CCCH logical channel.

In this embodiment, when the UE needs to request other system information or an RRC connection establishment process, a corresponding system information request message or RRC connection request message or RRC connection reestablishment request message or RRC connection resume request message may be constructed and delivered to the lower layer for transmission. If random access processes triggered by the system information request message (namely, the second CCCH logical channel) or another RRC message (namely, the first CCCH logical channel) share a preamble sequence set, the MAC entity may decide to include a CCCH SDU corresponding to a specific CCCH logical channel in a message 3 or to include CCCH SDUs of all CCCH logical channels in the message 3 based on the priorities and/or logical channel group identifiers of the logical channels. If random access processes triggered by the system information request message (namely, a CCCH SDU corresponding to the second CCCH logical channel) or another RRC message (namely, a CCCH SDU corresponding to the first CCCH logical channel) use different preamble sequences, the MAC entity may select a corresponding preamble sequence based on the priorities and/or logical channel group identifiers of the logical channels and deliver it to the lower layer for sending. For example, if the priority of the first CCCH logical channel (or the RRC connection request message or RRC connection reestablishment request message or RRC connection resume request message or the CCCH SDU corresponding to the first CCCH logical channel) is higher than the priority of the second CCCH logical channel (or the system information request message or the CCCH SDU corresponding to the second CCCH logical channel), when both the first CCCH logical channel and the second CCCH logical channel have CCCH SDUs to be sent, the MAC entity selects a preamble sequence from preamble sequences corresponding to the first CCCH logical channel and delivers it to the lower layer for sending. Vice versa.

Optionally, for the UE in an RRC idle state, before performing an RRC process for requesting other system information (delivering a request message for other system information to the lower layer for transmission), the UE further needs to perform one or more of the following steps:
(a) applying the default physical channel configuration (predefined parameter values);
(b) applying the default semi-persistent scheduling configuration (predefined parameter values);
(c) applying the default MAC main configuration (predefined parameter values);
(d) applying the second CCCH logical channel configuration (predefined parameter values).

The physical channel configuration and/or semi-persistent scheduling configuration and/or MAC main configuration corresponding to the first CCCH logical channel may be the same as the configuration corresponding to the second CCCH logical channel. If the CCCH SDU corresponding to the first CCCH logical channel has not been sent, and a process of requesting other system information is triggered (that is, a system information request message is to be sent), the UE may perform only the step different from the second CCCH logical channel configuration in the aforementioned steps, for example, perform only step (d); on the contrary, if the CCCH SDU corresponding to the second CCCH logical channel has not been sent, and an RRC connection establishment process is triggered (for example, an RRC connection request message or RRC connection reestablishment request message or RRC connection resume request message or the like waits to be sent), the UE may just apply configuration different from first CCCH logical channel configuration without the need to reconfigure the physical channel and/or semi-persistent scheduling and/or MAC.

In a further embodiment, priorities between the system information request message and the another RRC message are defined according to different conditions triggering the UE to request system information. The another RRC message may include: an RRC connection request message, an RRC connection reestablishment request message, an RRC connection resume request message, and an RRC connection reconfiguration complete message. For example, if the UE is triggered to send a system information request message (namely, start a system information request process) due to the expiration of locally stored system information, the system information request message has the highest priority. That is, when sending of a system information request message is triggered by the expiration of system information, if there is another RRC message which waits to be sent or has been sent but for which no response message is received, the another RRC message is canceled (or suspended in transmission) or the RRC process corresponding to the another RRC message is terminated (or suspended); if the another RRC message has been sent but no response message is received, a response message is not received. The system information request message is delivered to the lower layer.

Optionally, priorities between the system information request message and the another RRC message may also be defined according to conditions triggering the UE to request system information and the type of the requested system information.

Optionally, priorities between the system information request message and the another RRC message may also be defined according to only the type of the system information to be acquired. Some types of system information have higher priorities than the another RRC message, and some other system information has priorities lower than the another RRC message.

Optionally, priorities between different types of system information or priorities of preamble sequences corresponding to different types of system information may also be defined, and when multiple types of system information need to be requested, system information having a higher priority is preferentially requested.

### Scenario 2: the conflict occurs in a MAC layer

Conflicts of the MAC layer are divided into the following several types according to the different modes of requesting system information:

### Type 1: system information request random access conflicts with contention based random access

A preamble sequence of the contention based random access is a preamble sequence selected by the MAC layer, and the contention based random access may include random access triggered by the following events:
A. Random access triggered by a MAC sublayer itself;
B. Triggered by a PDCCH order or a handover or an RRC connection reconfiguration message carrying a handover instruction information element (denoted as mobilityControlInfo), where a preamble sequence value is 000000 or any other value for instructing the MAC to select a preamble sequence.

The following uses random access triggered by the MAC sublayer itself as an example for illustration, and the embodiment is also applicable to contention based random access triggered by another event.

In one embodiment, if one or more preamble sequences are reserved for a system information request, a preamble sequence for system information request random access is different from a preamble sequence for general random access. The MAC layer selects a corresponding preamble sequence for sending based on priorities predefined or configured through RRC signaling. For example, if it is predefined that the priority of the system information request random access is higher than that of the random access triggered by the MAC sublayer or general random access, when the conflict occurs, the MAC selects the preamble sequence reserved for the system information request random access and instructs the physical layer to send the preamble sequence. That is, in selecting a preamble sequence for random access, the MAC entity first determines whether any system information request random access exists or any preamble sequence corresponding to the system information request is to be sent, and if yes, the MAC entity selects the preamble sequence for the system information request random access and instructs the physical layer to send the preamble sequence. Alternatively, when system information request random access is triggered or a preamble sequence corresponding to the system information request is to be sent, if there is running random access triggered by the MAC sublayer or general random access, the UE may interrupt the currently running random access triggered by the MAC sublayer or general random access, and begin to perform the system information request random access or send the preamble sequence corresponding to the system information request. If it is predefined that the priority of the system information request random access is lower than that of the random access triggered by the MAC sublayer or general random access, when the conflict occurs, the MAC selects the preamble sequence for the general random access and instructs the physical layer to send the preamble sequence. That is, in selecting a preamble sequence for random access, the MAC entity first determines whether there is any random access triggered by the MAC sublayer or general random access, and if yes, the MAC entity selects the preamble sequence for the general random access and instructs the physical layer to send the preamble sequence. Alternatively, if there is running system information request random access, when the random access triggered by the MAC sublayer or general random access is triggered, the UE interrupts the currently running system information request random access, and begins to perform the random access triggered by the MAC sublayer or general random access or selects the preamble sequence of the general random access and instructs the physical layer to send the preamble sequence.

In another embodiment, the system information request random access and the general random access use the same preamble sequence. For example, the preamble sequence of the system information request random access is a contention based preamble sequence set of the general random access. The MAC entity selects a preamble sequence from the preamble sequence set of the general random access and instructs the physical layer to send the preamble sequence; in this case, the MAC entity resolves the conflict in a message 3. Priorities of a request message for other system information (namely, a CCCH SDU or second CCCH SDU corresponding to a system information request message) and another RRC message (for example, a CCCH SDU or first CCCH SDU corresponding to an RRC connection request message or RRC connection reestablishment request message or RRC connection resume request message) or data are predefined or configured through RRC signaling. The MAC entity includes a message or data having a higher priority in the message 3 based on the predefined priorities; or if the message 3 can contain multiple messages or pieces of data, the messages or data may be included in the message 3 according to priorities in descending order. For example, assume the request message for other system information is higher than the other message or data, in constructing the message 3, the MAC first determines whether any CCCH SDU corresponding to the request message for requesting other system information is to be sent, and if yes, includes the CCCH SDU in the message 3. How to construct a message 3 according to priorities of different messages is described in the embodiment corresponding to Type 3.

### Type 2: system information request random access conflicts with non-contention based random access

The non-contention based random access may include random access triggered by a PDCCH order and/or random access triggered by a handover. A preamble sequence corresponding to the random access is explicitly designated and is not 0000000 or any other value for instructing the MAC to select a preamble sequence (that is, the preamble sequence is not selected by the MAC entity). The following embodiment uses non-contention based random access triggered by a PDCCH order as an example, and the embodiment is also applicable to non-contention based random access triggered by another event.

In one embodiment, if one or more preamble sequences are reserved for a system information request, a preamble sequence for system information request random access is different from a preamble sequence for general random access. When a conflict occurs, the MAC layer selects a corresponding preamble sequence based on priorities predefined or configured through RRC signaling and instructs the physical layer to send the preamble sequence. For example, if it is specified that the priority of the system information request random access is higher than that of the random access triggered by the PDCCH order, when the conflict occurs, the MAC selects the preamble sequence reserved for the system information request random access and instructs the physical layer to send the preamble sequence. That is, in selecting a preamble sequence for random access, the MAC entity first determines whether any system information request random access exists or any preamble sequence for the system information request is to be sent, and if yes, the MAC entity selects the preamble sequence for the system information request random access and instructs the physical layer to send the preamble sequence. Alternatively, if system information request random access is triggered or a preamble sequence for the system information request is to be sent when the random access triggered by the PDCCH order is running, the UE interrupts the currently running random access triggered by the PDCCH order, and begins to perform the system information request random access or instructs the physical layer to send the preamble sequence for the system information request. If it is predefined that the priority of the system information request random access is lower than that of the random access triggered by the PDCCH order, when the conflict occurs, the MAC selects the explicitly designated preamble sequence in the PDCCH order and instructs the physical layer to send the preamble sequence. That is, in selecting a preamble sequence for random access, the MAC entity first determines whether there is any random access triggered by the PDCCH order, and if yes, the MAC entity selects the explicitly designated preamble sequence in the PDCCH order and instructs the physical layer to send the preamble sequence. Alternatively, if the PDCCH order triggers random access when the system information request random access is running, the UE interrupts the currently running system information request random access, and begins to perform the random access triggered by the PDCCH order or selects the explicitly designated preamble sequence in the PDCCH order and instructs the physical layer to send the preamble sequence.

It should be noted that the aforementioned embodiment is also applicable to the scenario in which the system information request random access and the general random access use the same preamble sequence. In this case, if the system information request random access needs to be performed, the MAC entity selects a preamble sequence from the preamble sequence set of the general random access for sending. The other process of the aforementioned embodiment remains unchanged. For example, the preamble sequence of the system information request random access is a contention based preamble sequence set of the general random access. When a random access process triggered by a system information request message is performed, the MAC entity selects a preamble sequence from the contention based preamble sequence set of the general random access and instructs the physical layer to send the preamble sequence.

### Type 3: random access triggered by a MAC sublayer, and a conflict occurs in a message 3

In this type, random access is triggered by a MAC sublayer. In constructing a message 3, the UE has multiple messages or pieces of data to be sent, where the messages or data may come from different CCCH logical channels or the same CCCH logical channel (which may carry an identifier for instructing a message type or message priority so that the MAC distinguishes different messages or priorities of different messages).

In one embodiment, the message 3 may carry only one type of message or data. For example, if the message 3 carries a CCCH SDU corresponding to a request message for requesting other system information, no other message or data can be carried. Priorities of different messages or data or CCCH SDUs or CCCH logical channels may be predefined or configured through RRC signaling. The UE includes the message or data or CCCH SDU having the highest priority in the message 3. If it is predefined that the priority of the CCCH SDU corresponding to the request message for requesting other system information or of the message is higher than that of another CCCH SDU or message or data, in constructing the message 3, the MAC entity first determines whether there is any CCCH SDU corresponding to a system information request message or message to be sent, and if yes, the MAC entity includes the content in the message 3; and if not, the MAC entity includes a CCCH SDU corresponding to the another CCCH or message or data in the message 3. If it is predefined that the priority of the CCCH SDU corresponding to the request message for requesting other system information or of the message is lower than that of another CCCH SDU or message or data, in constructing the message 3, the MAC entity first determines whether there is any CCCH SDU corresponding to another CCCH or message or data to be sent, and if yes, the MAC entity includes the CCCH SDU corresponding to the other CCCH or message or data in the message 3; and if not, the MAC entity includes the content in the message 3.

In another embodiment, the message 3 may carry multiple types of messages or data. For example, if uplink scheduling (UL Grant) carried in an RAR is large enough, the message 3 may carry multiple messages or CCCH SDUs or pieces of data, and these messages or CCCH SDUs or pieces of data are included in the message 3 in predefined order. For example, assume the CCCH SDU corresponding to the request message for requesting other system information is put ahead of a CCCH SDU corresponding to an RRC connection request message or RRC connection reestablishment request message or RRC connection resume request message or the like, and vice versa.

It should be noted that the predefined parameters or rules or priorities in the present disclosure may also be configured through RRC signaling.

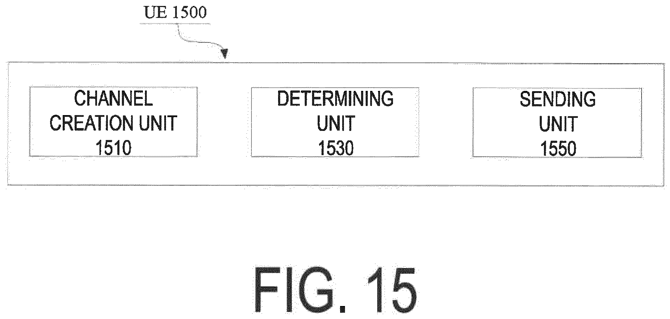

In accordance with the method 200 described above, the present disclosure provides user equipment (UE). FIG. 15 is a block diagram of UE 1500 according to an embodiment of the present disclosure. As shown in the figure, the UE 1500 includes: a channel creation unit 1510, a determining unit 1530, and a sending unit 1550. The channel creation unit 1510 is configured to create a first common control channel (CCCH) and a second common control channel (CCCH) having different priorities for respectively transmitting a dedicated radio resource control (RRC) message and a system information request message, where the system information request message is used for requesting system information other than minimum system information. The determining unit 1530 is configured to determine, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'. The sending unit 1550 is configured to send the random access message 3 'Msg3' to a base station.

In one embodiment, the dedicated RRC message includes one or more of the following: an RRC connection request message, an RRC connection reestablishment request message, and an RRC connection resume request message.

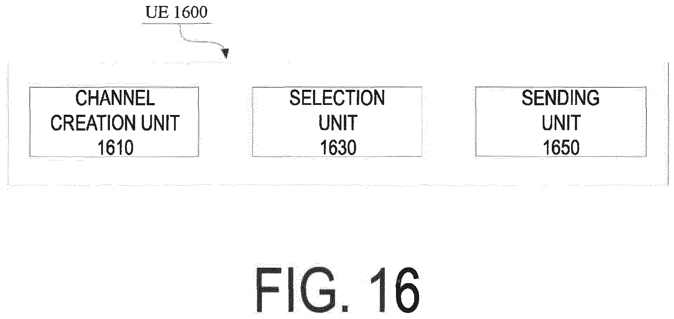

In accordance with the method 300 described above, the present disclosure provides user equipment (UE). FIG. 16 is a block diagram of UE 1600 according to an embodiment of the present disclosure. As shown in the figure, the UE 1600 includes: a channel creation unit 1610, a selection unit 1630, and a sending unit 1650. The channel creation unit 1610 is configured to create a first CCCH and a second CCCH for respectively transmitting a dedicated RRC message and a system information request message with different priorities. The selection unit 1630 is configured to select a preamble sequence corresponding to a CCCH having a higher priority in the first CCCH and the second CCCH. The sending unit 1650 is configured to send the selected preamble sequence to a base station.

In one embodiment, the dedicated RRC message includes one or more of the following: an RRC connection request message, an RRC connection reestablishment request message, and an RRC connection resume request message.

In one embodiment, a priority of the first CCCH is higher than a priority of the second CCCH. In this case, the selection unit 1630 is further configured to select a preamble sequence from preamble sequences corresponding to the first CCCH when both the first CCCH and the second CCCH have CCCH SDUs to be sent.

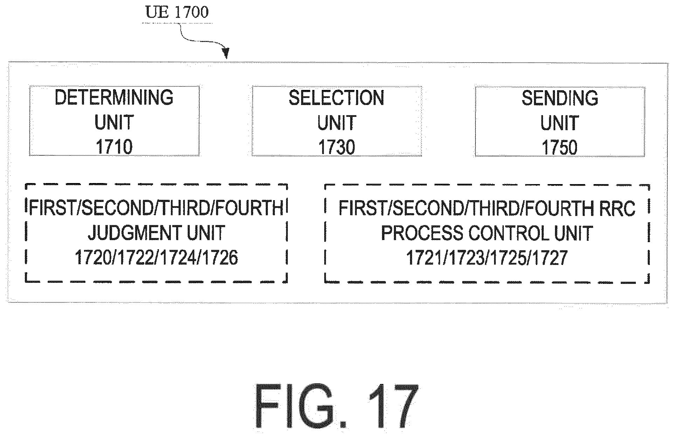

In accordance with the method 400 described above, the present disclosure provides user equipment (UE). FIG. 17 is a block diagram of UE 1700 according to an embodiment of the present disclosure. As shown in the figure, the UE 1700 includes: a determining unit 1710, a selection unit 1730, and a sending unit 1750. The determining unit 1710 is configured to determine priorities for transmitting a system information request message and a dedicated RRC message, where the system information request message is used for requesting system information other than minimum system information. The selection unit 1730 is configured to select, according to the priorities, a preamble sequence corresponding to a message having a higher priority in the system information request message and the dedicated RRC message when random access triggered by the system information request message conflicts with random access triggered by the dedicated RRC message. The sending unit 1750 is configured to send the selected preamble sequence to a base station.

In one embodiment, a priority of the system information request message is lower than a priority of the dedicated RRC message, and an RRC process for requesting system information is triggered. In this embodiment, the UE 1700 further includes: a first judgment unit 1720, configured to determine whether any RRC process other than the RRC process for requesting system information is triggered or running; and a first RRC process control unit 1721, configured to, if an RRC process other than the RRC process for requesting system information is triggered or running, wait for the triggered or running another RRC process to end, and then start the RRC process for requesting system information; or terminate the RRC process for requesting system information. According to this embodiment, optionally, the first RRC process control unit 1721 is further configured to, if no RRC process other than the RRC process for requesting system information is triggered or running, perform the RRC process for requesting system information.

In one embodiment, a priority of the system information request message is lower than a priority of the dedicated message, and an RRC process other than an RRC process for requesting system information is triggered. In this embodiment, the UE 1700 further includes: a second judgment unit 1722, configured to determine whether any RRC process for requesting system information is running; and a second RRC process control unit 1723, configured to, if an RRC process for requesting system information is running, terminate the running RRC process for requesting system information, and perform the RRC process other than the RRC process for requesting system information, and after the RRC process other than the RRC process for requesting system information ends, restart the RRC process for requesting system information.

In one embodiment, a priority of the system information request message is higher than a priority of the dedicated RRC message, and an RRC process for requesting system information is triggered. In this embodiment, the UE 1700 further includes: a third judgment unit 1724, configured to determine whether any RRC process other than the RRC process for requesting system information is triggered or running; and a third RRC process control unit 1725, configured to, if an RRC process other than the RRC process for requesting system information is triggered or running, terminate the running RRC process other than the RRC process for requesting system information, and perform the RRC process for requesting system information. According to this embodiment, optionally, the third RRC process control unit 1725 is further configured to, if no RRC process other than the RRC process for requesting system information is triggered or running, perform the RRC process for requesting system information.

In one embodiment, a priority of the system information request message is higher than a priority of the dedicated message, and an RRC process other than an RRC process for requesting system information is triggered. In this embodiment, the UE 1700 further includes: a fourth judgment unit 1726, configured to determine whether any RRC process for requesting system information is triggered or running; and a fourth RRC process control unit 1727, configured to, if an RRC process for requesting system information is triggered or running, wait for the triggered or running RRC process for requesting system information to end, and then start the RRC process other than the RRC process for requesting system information; or terminate the RRC process other than the RRC process for requesting system information.

It should be understood that the two or more different units involved in the present disclosure may be combined together logically or physically. For example, the first judgment unit 1720, the second judgment unit 1722, the third judgment unit 1724, and the fourth judgment unit 1726 may be incorporated into a single unit. In addition, the first RRC process control unit 1721, the second RRC process control unit 1723, the third RRC process control unit 1725, and the fourth RRC process control unit 1727 may also be incorporated into a single unit.

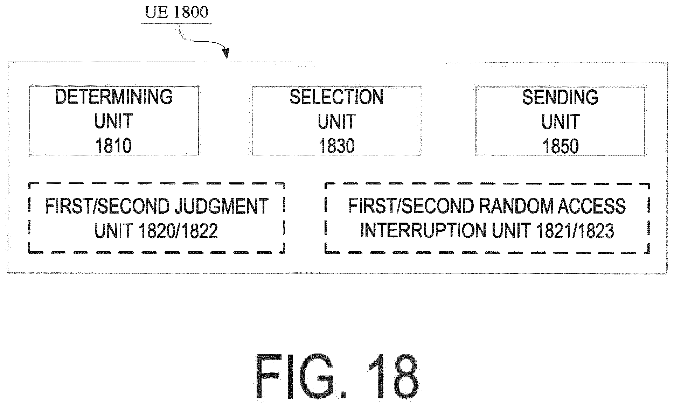

In accordance with the method 900 described above, the present disclosure provides user equipment (UE). FIG. 18 is a block diagram of UE 1800 according to an embodiment of the present disclosure. As shown in the figure, the UE 1800 includes: a determining unit 1810, a selection unit 1830, and a sending unit 1850. The determining unit 1810 is configured to determine priorities of random access triggered by a system information request message and random access triggered by another event, where the system information request message is used for requesting system information other than minimum system information. The selection unit 1830 is configured to select a preamble sequence corresponding to random access having a higher priority when the random access triggered by the system information request message conflicts with the random access triggered by the another event. The sending unit 1850 is configured to send the selected preamble sequence to a base station.

In one embodiment, a priority of the random access triggered by the system information request message is higher than a priority of the random access triggered by the another event. In this embodiment, the UE 1800 further includes: a first judgment unit 1820, configured to determine whether any preamble sequence corresponding to the random access triggered by the system information request message is to be sent. The selection unit 1830 is further configured to, if a preamble sequence corresponding to the random access triggered by the system information request message is to be sent, select the preamble sequence corresponding to the random access triggered by the system information request message. Optionally, the first judgment unit 1820 is further configured to determine whether there is any running random access triggered by another event, and the UE 1800 further includes: a first random access interruption unit 1821, configured to, if there is running random access triggered by another event, interrupt the currently running random access triggered by another random access triggering message. In this case, the selection unit 1820 is further configured to select a preamble sequence corresponding to the random access triggered by the system information request message.

In one embodiment, a priority of the random access triggered by the system information request message is lower than a priority of the random access triggered by the another event. In this embodiment, the UE 1800 further includes: a second judgment unit 1822, configured to determine whether there is any random access triggered by another event. The selection unit 1820 is further configured to, if there is random access triggered by another event, select a preamble sequence corresponding to the random access triggered by the another event. Optionally, the second judgment unit 1822 may be further configured to determine whether there is any running random access triggered by the system information request message, and the UE 1800 further includes: a second random access interruption unit 1823, configured to, if there is running random access triggered by the system information request message, interrupt the currently running random access triggered by the system information request message. In this case, the selection unit 1820 is further configured to select a preamble sequence corresponding to the random access triggered by the another event.

It should be understood that the two or more different units involved in the present disclosure may be combined together logically or physically. For example, the first judgment unit 1820 and the second judgment unit 1822 may be incorporated into a single unit. In addition, the first random access interruption unit 1821 and the second random access interruption unit 1823 may also be incorporated into a single unit.

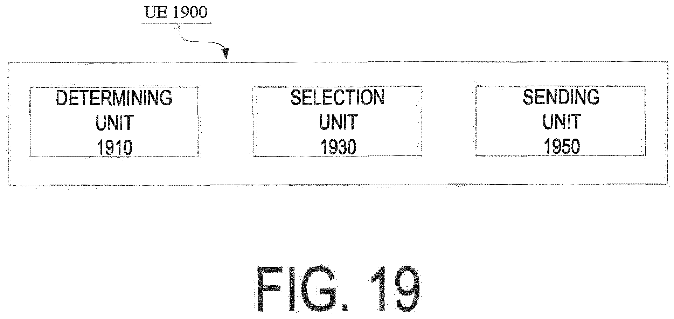

In accordance with the method 1400 described above, the present disclosure provides user equipment (UE). FIG. 19 is a block diagram of UE 1900 according to an embodiment of the present disclosure. As shown in the figure, the UE 1900 includes: a determining unit 1910, a selection unit 1930, and a sending unit 1950. The determining unit 1910 is configured to determine priorities of random access triggered by a system information request message and random access triggered by another event, where the system information request message is used for requesting system information other than minimum system information. The selection unit 1930 is configured to select a message corresponding to random access having a higher priority when the random access triggered by the system information request message conflicts with the random access triggered by the another event. The sending unit 1950 is configured to send the selected message to a base station by including the selected message in a random access message 3 'Msg3'.

The program running on the device according to the present invention may be a program that enables the computer to implement the functions of the embodiments of the present invention by controlling a central processing unit (CPU). The program or information processed by the program can be stored temporarily in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions can be achieved by reading programs recorded on the recording medium and running them by the computer system. The so-called "computer system" herein may be a computer system embedded in the device, which may include operating systems or hardware (for example, peripherals). The "computer-readable recording medium" may be a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed through circuits (for example, monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, one or more embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulted from the appropriate combinations of the technical means disclosed in different embodiments are also included within the technical scope of the present invention. In addition, components with the same effect described in the above embodiments may be replaced with one another.

## Claims

1. A method used in user equipment (UE), comprising:
creating a first common control channel (CCCH) and a second common control channel (CCCH) having different priorities for respectively transmitting a dedicated radio resource control (RRC) message and a system information request message, wherein the system information request message is used for requesting system information other than minimum system information;
determining, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'; and
sending the random access message 3 'Msg3' to a base station.

2. The method according to claim 1, wherein the dedicated RRC message comprises one or more of the following: an RRC connection request message, an RRC connection reestablishment request message, and an RRC connection resume request message.

3. User equipment (UE), comprising:
a channel creation unit, configured to create a first common control channel (CCCH) and a second common control channel (CCCH) having different priorities for respectively transmitting a dedicated radio resource control (RRC) message and a system information request message, wherein the system information request message is used for requesting system information other than minimum system information;
a determining unit, configured to determine, according to the priorities of the first CCCH and the second CCCH, to include a CCCH service data unit (SDU) corresponding to a specific one of the first CCCH and the second CCCH in a random access message 3 'Msg3' or to include CCCH SDUs of both the first CCCH and the second CCCH in the random access message 3 'Msg3'; and
a sending unit, configured to send the random access message 3 'Msg3' to a base station.

4. The UE according to claim 3, wherein the dedicated RRC message comprises one or more of the following: an RRC connection request message, an RRC connection reestablishment request message, and an RRC connection resume request message.

5. A method used in user equipment (UE), comprising:
creating a first CCCH and a second CCCH for respectively transmitting a dedicated RRC message and a system information request message with different priorities;
selecting a preamble sequence corresponding to a CCCH having a higher priority in the first CCCH and the second CCCH; and
sending the selected preamble sequence to a base station.

6. The method according to claim 3, wherein the dedicated RRC message comprises one or more of the following: an RRC connection request message, an RRC connection reestablishment request message, and an RRC connection resume request message.

7. User equipment (UE), comprising:
a channel creation unit, configured to create a first CCCH and a second CCCH for respectively transmitting a dedicated RRC message and a system information request message with different priorities;
a selection unit, configured to select a preamble sequence corresponding to a CCCH having a higher priority in the first CCCH and the second CCCH; and
a sending unit, configured to send the selected preamble sequence to a base station.

8. The UE according to claim 7, wherein the dedicated RRC message comprises one or more of the following: an RRC connection request message, an RRC connection reestablishment request message, and an RRC connection resume request message.

9. A method used in user equipment (UE), comprising:
determining priorities for transmitting a system information request message and a dedicated RRC message, wherein the system information request message is used for requesting system information other than minimum system information;
selecting, according to the priorities, a preamble sequence corresponding to a message having a higher priority in the system information request message and the dedicated RRC message when random access triggered by the system information request message conflicts with random access triggered by the dedicated RRC message; and
sending the selected preamble sequence to a base station.

10. The method according to claim 9, wherein if a priority of the system information request message is lower than a priority of the dedicated RRC message, and if an RRC process for requesting system information is triggered, the method further comprises:
determining whether any RRC process other than the RRC process for requesting system information is triggered or running; and
if an RRC process other than the RRC process for requesting system information is triggered or running, waiting for the triggered or running another RRC process to end, and then starting the RRC process for requesting system information; or terminating the RRC process for requesting system information.

11. The method according to claim 9, wherein if a priority of the system information request message is lower than a priority of the dedicated message, and if an RRC process other than an RRC process for requesting system information is triggered, the method further comprises:
determining whether any RRC process for requesting system information is running; and
if an RRC process for requesting system information is running, terminating the running RRC process for requesting system information, and performing the RRC process other than the RRC process for requesting system information, and after the RRC process other than the RRC process for requesting system information ends, restarting the RRC process for requesting system information.

12. The method according to claim 9, wherein if a priority of the system information request message is higher than a priority of the dedicated RRC message, and if an RRC process for requesting system information is triggered, the method further comprises:
determining whether any RRC process other than the RRC process for requesting system information is triggered or running; and
if an RRC process other than the RRC process for requesting system information is triggered or running, terminating the running RRC process other than the RRC process for requesting system information, and performing the RRC process for requesting system information.

13. The method according to claim 9, wherein if a priority of the system information request message is higher than a priority of the dedicated RRC message, and if an RRC process other than an RRC process for requesting system information is triggered, the method further comprises:
determining whether any RRC process for requesting system information is triggered or running; and
if an RRC process for requesting system information is triggered or running, waiting for the triggered or running RRC process for requesting system information to end, and then starting the RRC process other than the RRC process for requesting system information; or terminating the RRC process other than the RRC process for requesting system information.

14. User equipment (UE), comprising:
a determining unit, configured to determine priorities for transmitting a system information request message and a dedicated RRC message, wherein the system information request message is used for requesting system information other than minimum system information;
a selection unit, configured to select, according to the priorities, a preamble sequence corresponding to a message having a higher priority in the system information request message and the dedicated RRC message when random access triggered by the system information request message conflicts with random access triggered by the dedicated RRC message; and
a sending unit, configured to send the selected preamble sequence to a base station.

15. The UE according to claim 14, wherein if a priority of the system information request message is lower than a priority of the dedicated RRC message, and if an RRC process for requesting system information is triggered, the UE further comprises:
a first judgment unit, configured to determine whether any RRC process other than the RRC process for requesting system information is triggered or running; and
a first RRC process control unit, configured to, if an RRC process other than the RRC process for requesting system information is triggered or running, wait for the triggered or running another RRC process to end, and then start the RRC process for requesting system information; or terminate the RRC process for requesting system information.

16. The UE according to claim 14, wherein if a priority of the system information request message is lower than a priority of the dedicated message, and if an RRC process other than an RRC process for requesting system information is triggered, the UE further comprises:
a second judgment unit, configured to determine whether any RRC process for requesting system information is running; and
a second RRC process control unit, configured to, if an RRC process for requesting system information is running, terminate the running RRC process for requesting system information, and perform the RRC process other than the RRC process for requesting system information, and after the RRC process other than the RRC process for requesting system information ends, restart the RRC process for requesting system information.

17. The UE according to claim 14, wherein if a priority of the system information request message is higher than a priority of the dedicated RRC message, and if an RRC process for requesting system information is triggered, the UE further comprises:
a third judgment unit, configured to determine whether any RRC process other than the RRC process for requesting system information is triggered or running; and
a third RRC process control unit, configured to, if an RRC process other than the RRC process for requesting system information is triggered or running, terminate the running RRC process other than the RRC process for requesting system information, and perform the RRC process for requesting system information.

18. The UE according to claim 14, wherein if a priority of the system information request message is higher than a priority of the dedicated RRC message, and if an RRC process other than an RRC process for requesting system information is triggered, the UE further comprises:
a fourth judgment unit, configured to determine whether any RRC process for requesting system information is triggered or running; and
a fourth RRC process control unit, configured to, if an RRC process for requesting system information is triggered or running, wait for the triggered or running RRC process for requesting system information to end, and then start the RRC process other than the RRC process for requesting system information; or terminate the RRC process other than the RRC process for requesting system information.

19. A method used in user equipment (UE), comprising:
determining priorities of random access triggered by a system information request message and random access triggered by another event, wherein the system information request message is used for requesting system information other than minimum system information;
selecting a preamble sequence corresponding to random access having a higher priority when the random access triggered by the system information request message conflicts with the random access triggered by the another event; and
sending the selected preamble sequence to a base station.

20. The method according to claim 19, wherein if a priority of the random access triggered by the system information request message is higher than a priority of the random access triggered by the another event, the method further comprises:
determining whether any preamble sequence corresponding to the random access triggered by the system information request message is to be sent; and
if a preamble sequence corresponding to the random access triggered by the system information request message is to be sent, selecting the preamble sequence corresponding to the random access triggered by the system information request message.

21. The method according to claim 20, further comprising:
determining whether there is any running random access triggered by another event;
if there is running random access triggered by another event, interrupting the currently running random access triggered by another random access triggering message; and
selecting a preamble sequence corresponding to the random access triggered by the system information request message.

22. The method according to claim 19, wherein if a priority of the random access triggered by the system information request message is lower than a priority of the random access triggered by the another event, the method further comprises:
determining whether there is any random access triggered by another event; and
if there is random access triggered by another event, selecting a preamble sequence corresponding to the random access triggered by the another event.

23. The method according to claim 22, further comprising:
determining whether there is any running random access triggered by the system information request message;
if there is running random access triggered by the system information request message, interrupting the currently running random access triggered by the system information request message; and
selecting a preamble sequence corresponding to the random access triggered by the another event.

24. User equipment (UE), comprising:
a determining unit, configured to determine priorities of random access triggered by a system information request message and random access triggered by another event, wherein the system information request message is used for requesting system information other than minimum system information;
a selection unit, configured to select a preamble sequence corresponding to random access having a higher priority when the random access triggered by the system information request message conflicts with the random access triggered by the another event; and
a sending unit, configured to send the selected preamble sequence to a base station.

25. The UE according to claim 24, wherein if a priority of the random access triggered by the system information request message is higher than a priority of the random access triggered by the another event, the UE further comprises:
a first judgment unit, configured to determine whether any preamble sequence corresponding to the random access triggered by the system information request message is to be sent, wherein
the selection unit is further configured to, if a preamble sequence corresponding to the random access triggered by the system information request message is to be sent, select the preamble sequence corresponding to the random access triggered by the system information request message.

26. The UE according to claim 25, wherein the first judgment unit is further configured to determine whether there is any running random access triggered by another event, and the UE further comprises:
a first random access interruption unit, configured to, if there is running random access triggered by another event, interrupt the currently running random access triggered by another random access triggering message, wherein
the selection unit is further configured to select a preamble sequence corresponding to the random access triggered by the system information request message.

27. The UE according to claim 24, wherein if a priority of the random access triggered by the system information request message is lower than a priority of the random access triggered by the another event, the UE further comprises:
a second judgment unit, configured to determine whether there is any random access triggered by another event, wherein
the selection unit is further configured to, if there is random access triggered by another event, select a preamble sequence corresponding to the random access triggered by the another event.

28. The UE according to claim 27, wherein the second judgment unit is further configured to determine whether there is any running random access triggered by the system information request message, and the UE further comprises:
a second random access interruption unit, configured to, if there is running random access triggered by the system information request message, interrupt the currently running random access triggered by the system information request message, wherein
the selection unit is further configured to select a preamble sequence corresponding to the random access triggered by the another event.

29. A method used in user equipment (UE), comprising:
determining priorities of random access triggered by a system information request message and random access triggered by another event, wherein the system information request message is used for requesting system information other than minimum system information;
selecting a message corresponding to random access having a higher priority when the random access triggered by the system information request message conflicts with the random access triggered by the another event; and
sending the selected message to a base station by including the selected message in a random access message 3 'Msg3'.

30. User equipment (UE), comprising:
a determining unit, configured to determine priorities of random access triggered by a system information request message and random access triggered by another event, wherein the system information request message is used for requesting system information other than minimum system information;
a selection unit, configured to select a message corresponding to random access having a higher priority when the random access triggered by the system information request message conflicts with the random access triggered by the another event; and
a sending unit, configured to send the selected message to a base station by including the selected message in a random access message 3 'Msg3'.
